(19) Europäisches Patentamt / European Patent Office / Office européen des brevets

(11) **EP 2 200 940 B1**

(12) **FASCICULE DE BREVET EUROPEEN**

(45) Date de publication et mention
de la délivrance du brevet:
**17.08.2011   Bulletin 2011/33**

(21) Numéro de dépôt: **08840326.6**

(22) Date de dépôt: **08.10.2008**

(51) Int Cl.:
*C01F 5/14* (2006.01)      *C01F 5/16* (2006.01)
*C01G 1/02* (2006.01)      *C01F 11/02* (2006.01)
*C04B 2/06* (2006.01)      *B01D 53/14* (2006.01)
*B01J 20/04* (2006.01)

(86) Numéro de dépôt international:
**PCT/BE2008/000078**

(87) Numéro de publication internationale:
**WO 2009/049382 (23.04.2009 Gazette 2009/17)**

(54) **HYDROXYDE DE CALCIUM ET / OU DE MAGNESIUM A TRES HAUTE REACTIVITE ET SA PREPARATION**

CALCIUM- UND/ODER MAGNESIUMHYDROXID MIT HÖHERER AKTIVITÄT UND SEINE ZUBEREITUNG

CALCIUM AND/OR MAGNESIUM HYDROXIDE WITH HIGHER ACTIVITY, AND PREPARATION THEREOF

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **19.10.2007   BE 200700509**

(43) Date de publication de la demande:
**30.06.2010   Bulletin 2010/26**

(73) Titulaire: **Lime Technology Consulting Sprl**
**4530 Villers-le-Bouillet (BE)**

(72) Inventeur: **DUMONT, Philippe**
**B-4470 St. Georges-sur-Meuse (BE)**

(74) Mandataire: **Powis de Tenbossche, Roland et al**
**Cabinet Bede S.A.**
**Boulevard Général Wahis 15**
**1030 Bruxelles (BE)**

(56) Documents cités:
**WO-A-92/09528        US-A- 2 149 269**
**US-A- 4 636 379        US-A- 5 332 436**

• **N. KANTIRANIS: "Hydration of high-calcium quicklime with methanol-water mixtures" CONSTRUCTION AND BUILDING MATERIALS, vol. 17, no. 2, mars 2003 (2003-03), pages 91-96, XP002487517 Elsevier Science Ltd.**

EP 2 200 940 B1

**Description**

La présente invention a pour objet une chaux hydratée à très haute réactivité par rapport aux substances avec lesquelles elle réagit chimiquement dans ses multiples utilisations comme par exemples, le traitement des eaux et des gaz, la production de matériaux silico-calcaires, le traitement des sols, la fabrication de peintures minérales (badigeons), d'enduits de plafonnage et de mortiers de maçonnerie.

La présente invention a également pour objet un procédé économique de préparation d'uri hydroxyde de calcium et / ou de magnésium particulièrement réactif.

## Etat de la technique

A l'exception de la métallurgie, de la sidérurgie et des matériaux réfractaires, la chaux est principalement utilisée à l'état d'hydroxyde de calcium et / ou de magnésium, soit sous forme pulvérulente et sèche (chaux hydratée) soit en présence d'eau sous forme pâteuse (chaux coulée) ou d'une suspension aqueuse (lait de chaux). L'extinction de la chaux vive ou dolomitique est réalisée en usine ou par contact de matériaux qui contiennent une quantité d'eau suffisante à son hydratation comme le sable humide pour la fabrication des matériaux silico-calcaires ou dans le traitement des sols humides en construction routière.

La chaux hydratée calcique et / ou magnésienne est un solide cristallin basique qui ne peut réagir dans des réactions du type acide - base, qu'en présence d'eau qui va permettre sa solubilisation et la formation des ions (Ca ++) et hydroxyles (OH-).

Cependant, la chaux est un matériau relativement peu soluble dans l'eau avec des concentrations de 1,85 gr Ca(OH)2 /l à 0°C et 0,79 gr /l à 100°C ce qui limite sa réactivité.

On a cherché à améliorer l'activité chimique de ce solide cristallin en modifiant des propriétés physiques comme la finesse et la surface spécifique afin d'avoir des réactions plus rapides et plus complètes. Ces caractéristiques sont regroupées sous un terme plus général : « la réactivité ».

Caractériser la réactivité de la chaux hydratée par la surface spécifique et sa finesse sans tenir compte de la morphologie des cristaux, ne permet pas de définir complètement l'aptitude de la chaux à réagir chimiquement aux substances solides, liquides ou gazeuses.

Par exemple, dans les réactions en phase aqueuse, la finesse et la surface extérieure des micelles de la chaux seront un facteur prépondérant en raison de la tension superficielle du liquide qui empêche la circulation du liquide à l'intérieur des micelles. La structure et la morphologie auront également une importance prépondérante.

Il en est de même pour des réactions entre la chaux hydratée et des solides humides comme la silice et l'argile dans la production des matériaux silico-calcaires et pour la stabilisation des sols argilo-limoneux.

Pour les réactions en phase gazeuse et le traitement des gaz résiduaires, la surface spécifique interne de la chaux hydratée est un facteur important pour la neutralisation des gaz acides, mais la structure et la morphologie des cristaux sont également des facteurs importants. Ces trois paramètres vont définir « la réactivité » de la chaux dans les traitements de gaz, c'est-à-dire au moins la cinétique de la réaction avec des gaz acides et le taux d'absorption des gaz acides.

Il est bien connu que la chaux hydratée est formée par précipitation des ions calcium et hydroxyles en solution avec formation de nucléi ou germes de cristallisation et grossissement de ceux-ci sous forme de cristaux.

De nombreuses études ont mis en évidence la morphologie des cristaux d'hydroxyde de calcium, morphologie définie par un système cristallin hexagonal dans lequel l'axe cristallographique vertical c est perpendiculaire à 3 axes coplanaires, a1, a2 et a3 d'égale dimension et écartés chacun d'un angle de 120 degrés.

Les conditions d'extinction de la chaux vive vont déterminer la dimension, le nombre, la morphologie et le degré de cristallisation des cristaux.

De cette façon, la chaux hydratée est constituée de plaques prismatiques hexagonales d'épaisseurs variables selon la dimension des axes c et a, séparées entre elles par des ponts d'hydrogène de faible intensité.

Cette structure confère, entre autres, à la chaux hydratée ses propriétés plastiques sous forme de pâte par glissement des plaques les unes sur les autres.

L'écartement entre les plaques étant une valeur constante ou sensiblement constante, il s'ensuit que le volume des vides est proportionnel à la surface spécifique de l'hydrate et inversement proportionnel à l'épaisseur des plaques (axe c) comme le confirment de nombreux chercheurs.

Dès lors, contrairement à la chaux vive, le volume des vides des hydroxydes de Ca et Mg n'est pas constitué de pores cylindriques caractérisés par un diamètre sectionnel mais par un écartement entre les plaques.

La valeur de cet écartement est constante ou sensiblement constante. Il s'ensuit que le volume des vides est proportionnel à la surface des plaques et inversement proportionnel à leur épaisseur par unité de poids.

Cette structure des chaux hydratées a été mise en évidence par microscopie optique et électronique au cours de très nombreuses recherches menées par les centres de recherches de l'industrie cimentière, puisque l'hydroxyde de calcium (CH) Portlandite est un composant essentiel (environ 30%) des silicates de calcium hydraté (CSH). W. Jozewicz et B.K.Gullet confirment dans une publication du Zement-Kalk-Gips (1/1994) la corrélation parfaitement linéaire entre la surface spécifique BET ($m^2$ / g) et la porosité de chaux commerciales et produites en laboratoire.

L'utilisation d'une chaux hydratée à très haute réactivité présente de très nombreux avantages et un grand intérêt économique dans de multiples utilisations comme le traitement des eaux, la stabilisation des sols, la fabrication de matériaux silico-calcaires auto-clavés, la neutralisation des gaz résiduaires, les mortiers de maçonnerie et de plafonnage ainsi que les badigeons (peintures minérales).

Pour ces applications, on utilise généralement une chaux hydratée conventionnelle obtenue par réaction d'une chaux vive pulvérulente avec une quantité d'eau d'environ deux fois la quantité stoechiométrique afin d'éliminer la chaleur de réaction par évaporation de l'eau en excès.

En dépit de la présence permanente d'un excès d'eau liquide, les températures de réaction locale sont supérieures à 100°C dans un système CaO-Ca(OH)2 - H2O liquide - H2O gaz en déséquilibre par la rapidité des réactions.

Dès lors, les températures de réaction locale sont comprises entre 110°C et 135°C, provoquant la formation rapide d'une grande quantité de vapeur.

La dimension des grains de cette chaux hydratée traditionnelle est comprise entre 2 et 90 microns avec une forte proportion de particules entre 10 et 40 microns et sa surface spécifique varie entre 12 et 18 $m^2$/gr. Ces grains sont constitués d'hydroxyde de calcium sous forme de gros cristaux fortement cristallisés comme l'indique la netteté et l'intensité des raies (raies à d = 0,49nm) obtenues par diffraction des rayons-X selon la méthode de Debye-Sherrer.

La méthode des poudres due à Debye et Sherrer consiste à placer l'échantillon finement divisé contenu dans un tube capillaire à parois minces au centre d'une chambre cylindrique couverte d'une pellicule radiographique. Un faisceau de rayon-X est projeté sur l'échantillon à l'aide de la raie $K\alpha$ du cuivre.

Les faisceaux réfléchis par chaque série de plans réticulaires du cristal engendrent un cône de rayons diffusés.

Ce cône coupant la pellicule cylindrique entourant l'échantillon est à l'origine des raies observées.

On mesure la distance de chaque raie au milieu de la tache centrale. A partir de ces mesures, le calcul de l'intervalle entre les plans permet d'identifier la nature des cristaux par rapport aux valeurs de référence connues avec une valeur des raies de réflexion d = 0,49 nm pour $Ca(OH)_2$.

Cette analyse qualitative est appliquée dans le but d'évaluer le degré de cristallisation de l'hydroxyde de calcium. L'intensité de la raie de diffraction (d = 0,49 nm) augmente avec une augmentation du degré de cristallisation de l'hydrate.

Nous avons établi ainsi une échelle de valeurs en unités arbitraires entre 0 et 100 unités. Cette méthode est utilisée en chimie inorganique minérale pour apprécier le degré de cristallisation des ciments et autres composés inorganiques.

Ces caractéristiques et cette morphologie confèrent à la chaux traditionnelle une très faible réactivité qui va influencer défavorablement les multiples applications comme produit chimique ou comme matériau de construction.

Cette chaux traditionnelle a une faible plasticité, un faible taux de carbonatation dans les mortiers de maçonnerie et de plafonnage ainsi qu'une très faible capacité d'absorption des gaz acides.

L'utilisation de cette chaux hydratée traditionnelle comme badigeon ou peinture minérale à la chaux met en exergue sa faible réactivité et sa mauvaise aptitude à se carbonater au contact de l'anhydride carbonique de l'air. Cette réaction qui nécessite la présence d'humidité, puisque le réactif est à l'état solide, est tellement lente que la vitesse de séchage est supérieure à la cinétique de la réaction de carbonatation, avec comme conséquences une très mauvaise adhérence au support et un poudroiement.

L'emploi de chaux hydratée en pâte, produite avec un large excès d'eau ou de chaux hydratée très fine ou encore de chaux hydratée à grande surface spécifique sont de nature à améliorer l'adhérence du badigeon sur son support sans toutefois atteindre les performances souhaitées.

C'est dans le cadre de cette recherche que le produit et procédé de fabrication de chaux hydratée à très haute réactivité selon l'invention ont été découverts. Ses applications dépassent largement ce domaine d'application.

Afin de remédier à ces inconvénients majeurs, différents procédés ont été proposés en vue d'améliorer les propriétés physico-chimiques des chaux hydratées et leur réactivité.

Ainsi, les brevets US 2,309,168 - 2,365,736 - 2,409,546 proposent d'hydrater la chaux vive sous pression en vue d'obtenir une chaux complètement hydratée dont la plasticité est très élevée en vue de rendre cette chaux apte à former des mortiers très maniables.

Les chaux hydratées calciques et dolomitiques ainsi formées se caractérisent par une plasticité Emley supérieure à 200 mesurée selon la norme ASTM C110-85, consécutive à une grande surface spécifique et une très grande finesse.

Les procédés sous pression ont été améliorés selon US 3,106,453 et US 3,250,520 par l'utilisation de chaux vive à très haute réactivité calcinée rapidement à basse température.

En dépit de ces améliorations, la netteté et l'intensité des raies obtenues par diffraction X selon la méthode de Debye-Sherrer (radiation Cu $K\alpha$) montrent que les micelles de ces chaux sont constituées de cristaux bien formés.

Ce degré de cristallisation élevé limite la réactivité du solide. Par ailleurs, le procédé d'hydratation sous pression nécessite des équipements coûteux et augmente considérablement le coût de production.

On a également cherché à améliorer la réactivité des hydrates et en particulier leur plasticité selon le brevet US 2,453,637 en incorporant aux hydrates sous pression des carbonates ou bicarbonates de sodium, potassium et magnésium à raison de moins de 3% en poids.

Toujours dans le but d'améliorer la qualité des hydrates, le brevet US 2,956,867 préconise un broyage fin afin d'améliorer la plasticité de l'hydrate.

Le brevet US 3,120,444 recommande l'ajout d'alcools aliphatiques comme le méthanol, l'éthanol, l'alcool polyvinylique, le glycérol dans des proportions variables et inférieures à 10%.

Selon le brevet US 4,636,379, la chaux vive est hydratée à une température inférieure à 45°C avec une solution contenant 30 à 50 parts en volume d'eau et 70 à 50 parts en volume de méthanol qui est ensuite éliminé par évaporation. Ce procédé permet d'obtenir des hydrates secs ayant une surface spécifique comprise entre 36 et 48 $m^2$ / g.

En vue de produire de très fines particules d'hydroxyde de calcium avec une surface spécifique élevée, le brevet DE 3620024 A1 propose d'ajouter à l'eau d'hydratation de 0,1 à 5,0% en poids d'alcool et de sucre et d'améliorer la fluidité de l'hydrate en incorporant de 0,1 à 5,0% en poids de glycol ou d'amine.

Dans un autre procédé (EP 0 558 522 B1), l'homme de métier a proposé de transformer de l'oxyde de calcium et / ou magnésium en hydroxyde de calcium et / ou magnésium, par réaction d'une quantité d'eau comprise entre 0,6 et 2 parts en poids pour 1 part de CaO et / ou MgO en présence d'un additif chois parmi le monoéthylène glycol, le diéthylène glycol, triéthylène glycol, la monoéthanolamine, la diéthanolamine, la triéthanolamine et leurs mélanges, à raison d'un rapport en poids additifs CaO et / ou MgO supérieur à : 0,002 :1

Le produit obtenu par ce procédé présente une surface spécifique supérieure à 35 $m^2$ / g et une teneur en humidité inférieure à 50%.

On connaît également par le document US 5,492,685 une chaux hydratée composée de particules qui ont une surface spécifique supérieure à 55 $m^2/g$, un diamètre moyen inférieur à 2,5 microns et un volume poreux supérieur à 0,25 $cm^3$ / g.

Le procédé selon ce brevet préconise l'hydratation d'une chaux vive très réactive, avec une surface spécifique comprise entre 1,5 et 3,0 $m^2$ / g, avec un mélange d'eau et d'alcool à raison de 1 à 2 fois la stoechiométrie en eau et 2 à 3 volumes d'alcool par volume d'eau.

En vue de caractériser la réactivité de la chaux, l'accent est mis sur la surface spécifique, le volume poreux, le diamètre des pores, la taille des particules de chaux et la dimension des cristaux.

On connaît enfin par le document EP 0 861 209 B1 un procédé d'hydratation d'une chaux vive pulvérulente de réactivité moyenne (supérieure à 30°C / min) avec une quantité d'eau telle que l'hydrate contient de 15 à 30 % en poids d'humidité qui est séchée à une température inférieure à 500°C pour éviter la réaction inverse de déshydratation ($Ca(OH)_2 \rightarrow CaO + H_2O$) et en l'absence de $CO_2$ en vue d'éviter une réaction de carbonatation ($Ca(OH)_2 + CO_2 \rightarrow CaCO_3$) et qui est ensuite broyée en vue d'obtenir une chaux hydratée sèche et non carbonatée avec un refus à 32 microns compris entre 20 et 50%, une surface spécifique supérieure à 30 $m^2$ / g et un volume poreux d'au moins 0,1 $cm^3/g$.

Tous ces procédés ont contribué à améliorer la réactivité des chaux hydratées par l'augmentation de la finesse des particules et surtout par l'obtention de cristaux hexagonaux d'hydroxyde de calcium plus fins (c ≤ a) qui ont une plus grande surface spécifique et un volume des vides correspondant plus important.

Cependant, en dépit de ces améliorations, l'épaisseur des plaques reste supérieure à 150 microns, ce qui représente un nombre d'ions Ca ++ et OH- très important par rapport aux dimensions du cristal élémentaire de l'hydroxyde de calcium décrit par Hedin (base 3,5844 Å et 4,8962 Å de hauteur).

Il s'ensuit que malgré l'amélioration de la réactivité due à l'augmentation de la surface spécifique et de la finesse, les rendements de ces chaux hydratées peuvent encore être considérablement augmentés. Par exemple, l'utilisation comme badigeon de chaux hydratée avec une surface spécifique supérieure à 35 $m^2$ / g, a une adhérence supérieure sur une plaque de verre aux chaux hydratées conventionnelles, comme le montre un simple test d'arrachage au moyen de films adhésifs. Cependant, si la surface résiduelle du film de chaux carbonatée qui reste sur la plaque de verre est de 35% avec la chaux conventionnelle et de 62% avec les chaux à grande surface spécifique (> 35 $m^2$ / g), l'adhérence n'est pas totale et est susceptible d'être encore fortement améliorée.

Il en est de même pour le traitement des gaz résiduaires de l'incinération des ordures ménagères. La neutralisation des gaz acides qui contiennent de fortes concentrations en HCl et $SO_2$ est réalisée par injection sèche de chaux hydratée pulvérulente. Pour atteindre les concentrations limites en HCl et $SO_2$, il faut utiliser des quantités de réactif largement excédentaires par rapport à la stoechiométrie des réactions de neutralisation des gaz acides.

Avec la chaux hydratée conventionnelle, les quantités nécessaires de chaux hydratée sont 3 à 4 fois supérieures à la stoechiométrie et de 2 à 3 fois supérieures avec les chaux à grande surface spécifique comme en témoignent la composition des résidus de l'incinération des ordures ménagères (REFIOM) ci-après :

|  | Ca(OH)$_2$ correspondant | Sur 100 parts |
|---|---|---|
| Teneur en chaux résiduelle Ca(OH)$_2$ (%) | 17,07    17,07 | 34,36 |
| Teneur en chlorure de calcium (CaCl$_2$) (%) | 20,54    13,69 | 27,56 |
| Teneur en sulfate de calcium (CaSO$_4$) (%) | 2,45    1,34 | 2,70 |
| Teneur en carbonate de calcium (CaCO$_3$) (%) | 23,75    17,58 | 35,38 |
| Total : | 63,81    49,68 | 100,00 |

On constate que les chaux à grande surface spécifique nécessitent encore un surdosage important puisque le rendement effectif c-à-d le pourcentage de chaux hydratée réellement utilisée pour la neutralisation des gaz acides (HCl, SO$_2$) n'est que légèrement supérieur à 30%.

Le demandeur a découvert de façon surprenante qu'il était possible d'obtenir une chaux hydratée encore plus réactive permettant entre autres un meilleur rendement effectif pour le traitement de gaz acides.

**Brève description de l'invention**

L'invention a pour objet des particules d'hydroxyde de calcium et / ou de magnésium à très haute réactivité caractérisées en ce qu'elles présentent une raie de diffraction aux rayons X à d = 0,49nm selon la méthode des poudres de Debye-Sherrer d'intensité inférieure à 50% (réduction d'au moins 50%), avantageusement à 35% (réduction d'au moins 65%), de préférence inférieure à 25% (réduction d'au moins 75%) de l'intensité d'une chaux hydratée traditionnelle avec une teneur en humidité de 1,5% et une surface spécifique de 15,8m$^2$/g préparée par simple réaction d'une chaux vive moulue avec une quantité d'eau correspondant à un rapport en poids eau/chaux de 0,60/1.

De préférence, au moins 50% en poids, avantageusement au moins 75% en poids, de préférence au moins 85% en poids des particules se présente sous forme de micelles très faiblement cristallisés.

Selon une particularité, les particules d'hydroxyde de calcium et / ou de magnésium contiennent des additifs choisis parmi les organo poly siloxanes, les organo hydrosiloxanes ou hydropolysiloxanes, les méthylhydro-siloxanes ou -polysiloxanes, les polydiméthylsiloxanes, les polydiméthylsiloxanes comportant un ou plusieurs groupes silanols, les polymères organiques comportant un ou plusieurs groupes fonctionnels éther et alcool et leurs mélanges dans un rapport en poids additifs / CaO et / ou MgO supérieur à 0,0005 :1, avantageusement inférieur à 0,01 :1, de préférence compris entre 0,002:1 et 0,005:1.

Selon un détail avantageux, au moins 50% en poids des particules est formée par des plaquettes présentant une épaisseur de moins de 150$\mu$m, avantageusement de moins de 100$\mu$m, en particulier de moins de 75$\mu$m.

L'invention a également pour objet un procédé de préparation d'un hydroxyde ce calcium et / ou de magnésium selon l'invention. Dans le procédé selon l'invention, on fait réagir à une température inférieure à 100°C du CaO et / ou MgO avec une eau saturée au moins à 25%, avantageusement saturée au moins à 50%, de préférence saturée au moins à 75%, en particulier saturée à un niveau au moins proche de 95% à 100% en ions calcium et hydroxyles en présence d'un additif choisi parmi les organo poly siloxanes, les organo hydrosiloxanes ou hydropolysiloxanes, les méthylhydro-siloxanes ou -polysiloxanes, les polydiméthylsiloxanes, les polydiméthylsiloxanes comportant un ou plusieurs groupes silanols, les polymères organiques comportant un ou plusieurs groupes fonctionnels éther et alcool et leurs mélanges, le rapport en poids additif / CaO et / ou MgO étant supérieur à 0,0005 :1.

Selon une particularité, on fait réagir à une température inférieure à 100°C du CaO et / ou MgO avec une eau au moins saturé à plus de 50% en ions calcium et hydroxyles, ladite eau étant en plus sursaturée en ions calcium et/ou en ions hydroxyles.

Selon un détail avantageux, on utilise une eau présentant une saturation au moins partielle en ions calcium et en ions hydroxyles à une température d'environ 30°C, de préférence une eau saturée ou au moins sensiblement complètement saturée en chaux à une température inférieure à 30°C.

Selon un autre détail avantageux, le rapport en poids additif / CaO et / ou MgO est compris entre 0,001 :1 et 0,01 :1, de préférence entre 0,002 :1 et 0,005 :1.

En particulier, on maintient la température maximale de réaction entre 80°C et 95°C. De préférence, on maintient la température de réaction d'au moins 50% en poids du CaO et/ou MgO avec une eau présentant une saturation à une température comprise entre 80°C et 95°C.

Selon une particularité, le ou les additifs sont intimement mélangés au CaO et / ou MgO durant une opération de broyage et/ou de mouture, et/ou incorporés dans l'eau d'hydratation.

L'invention a encore pour objet l'utilisation de particules d'hydroxyde de calcium et / ou de magnésium suivant l'invention, dans une application choisie parmi le groupe constitué du traitement des gaz, la stabilisation des sols, le traitement des eaux et des gaz, la production de matériaux silico-calcaires, le traitement des sols, le traitement de liquides, en particulier le traitement d'eaux, les peintures minérales, les enduits de plafonnage, et les mortiers de maçonnerie.

Les revendications attachées au présent mémoire donnent des particularités de l'invention.

## Description d'exemples

Le demandeur a découvert qu'en hydratant du CaO et /ou MgO à une température inférieure à 100°C avec une solution aqueuse saturée en ions Ca++ et OH- (eau de chaux) et en utilisant des additifs particuliers, il était possible d'obtenir un hydroxyde de calcium et / ou magnésium constitué de cristaux de très petites dimensions et peu cristallisés c-à-d dans un état amorphe avec une réactivité très supérieure aux chaux hydratées obtenues selon les procédés connus.

Le demandeur a réussi à préparer un hydroxyde de calcium à très haute réactivité en utilisant une eau d'hydratation saturée en ions calcium et en ions hydroxyles dont les concentrations sont inversement proportionnelles à la température (1,85 g / l à 0°C - 0,77 g / l à 100°C) et en opérant l'hydratation de la chaux vive en présence d'une quantité d'un additif choisi parmi les polymères :les organo poly siloxanes, les organo hydrosiloxanes ou hydropolysiloxanes, les méthylhydro-siloxanes ou - polysiloxanes, les polydiméthylsiloxanes, les polydiméthylsiloxanes comportant un ou plusieurs groupes silanols, les polymères organiques comportant un ou plusieurs groupes fonctionnels éther et alcool et leurs mélanges, la quantité d'additifs étant que le rapport en poids additif / CaO et en MgO est supérieur à 0.0005 : 1, mais est en particulier compris entre 0,002 :0 et 0,005 :1, par exemple 0,0025:1, 0,003:1, 0,004:1.

L'additif est ajouté soit lors du broyage de la chaux vive, soit dans l'eau de chaux qui sera utilisée pour la réaction d'hydratation.

Dans les exemples de réalisation, la température réactionnelle maximale ou pic de réaction d'hydratation est maintenue en deçà de 100°C et de préférence entre 80 et 95°C, afin d'éviter la formation d'eau gaz préjudiciable à la réactivité de l'hydrate.

Le refroidissement de la température de réaction ou son maintien dans une plage déterminée a été obtenu par injection d'air ou d'un gaz (en particulier inerte, par exemple azote) à température ambiante à la base d'un lit fluidisé. Les particules d'hydroxyde de calcium humides sont maintenues en suspension par l'air ou le gaz de fluidisation. Un contrôle/mesure de la température est avantageusement réalisé au moyen d'une sonde thermique, ce contrôle/mesure de température étant alors utilisé pour réguler le débit des réactifs (eau de chaux et chaux vive) et/ou de gaz de fluidisation, pour rester dans la plage de température désirée.

Dans un procédé de préparation utilisé, l'oxyde de calcium et / ou magnésium a été soumis à un broyage par voie sèche au cours duquel, le ou les additifs ont été incorporés dans la chaux vive.

L'hydroxyde de calcium et / ou de magnésium obtenu par le procédé peut si nécessaire être soumis à un séchage en vue de réduire la teneur en humidité et/ou à un broyage et divers traitements en vue d'améliorer les propriétés rhéologiques de la chaux hydratée pulvérulente, par exemple en vue de faciliter son transport pneumatique et son dosage lors de son utilisation, par exemple dans des utilisations de traitement de gaz et de liquides.

Par l'hydratation au moyen d'une eau de chaux saturée en ions calcium (Ca $^{++}$) et hydroxyles (OH$^-$) en présence de polymères organiques, dans les quantités ci-avant citées, le demandeur a pu obtenir des micelles d'hydroxyde de calcium très fins dont le diamètre moyen est inférieur au micron qui sont très faiblement cristallisés, voire amorphes, comme le montre l'examen des raies de la diffraction aux X-ray sur poudre selon la méthode de Debye-Sherrer.

La chaux de l'invention qui a été préparée dans les exemples présente une structure amorphe ou sensiblement amorphe et la taille des micelles d'hydroxyde de calcium et ou magnésium, cette chaux hydratée présentant une très grande réactivité et une surface spécifique selon la méthode BET supérieure à 35 m$^2$ / g.

Dans les exemples de préparation, il semble que l'ajout d'une solution saturée en ions calcium et hydroxyles au contact de la chaux et sous l'action d'une brusque élévation de température provoque une super-saturation du milieu et la formation rapide de nombreux nuclei ou germes d'hydroxydes de calcium. Sans limiter l'invention à cette théorie possible, il semble également que la présence des additifs va perturber et inhiber la croissance et la structure des nuclei hydroxyde de calcium.

Les additifs utilisés dans le procédé sont avantageusement des additifs contribuant à l'état final des micelles d'hydroxyde de calcium, probablement par un effet d'absorption superficielle, et/ou d'empoisonnement et/ou d'inhibiteur de croissance des nuclei aboutissant à un hydroxyde de calcium irrégulier, peu cristallisé dans un état amorphe ou sensiblement amorphe et/ou avec une épaisseur de plaque faible, cet hydroxyde présentant une grande surface spécifique et une haute, voire très haute réactivité.

D'autres particularités et détails de l'invention ressortiront de la description détaillée d'exemples spécifiques de préparation et d'utilisation de chaux hydratée selon l'invention, exemples comparatifs avec des chaux hydratées préparées selon un ou des procédés connus.

Dans des exemples, des essais comparatifs ont été réalisés pour diverses utilisations, pour mettre en exergue les performances exceptionnelles de l'hydroxyde de calcium selon l'invention.

Préparation des hydroxydes de calcium selon l'invention et non selon l'invention, à partir d'un même lot de chaux vive.

## Hydroxyde de calcium A (comparatif)

Une chaux hydratée traditionnelle a été préparée par réaction d'une chaux vive moulue avec une quantité d'eau correspondant à un rapport en poids eau / chaux de 0,60 /1. L'hydroxyde de calcium ainsi obtenu avait une teneur en humidité de 1,5% et une surface spécifique de 15,8 $m^2$ / g.

## Hydroxyde de calcium B (comparatif)

Conformément au brevet EPO 558 522 B1, on hydrate la chaux vive moulue avec 0,83 part en poids d'eau et en présence de 0,008 part en poids de diéthylène glycol pour une part en poids de chaux vive.
Après séchage de l'humidité résiduelle de l'hydrate, la surface spécifique était de 39 $m^2$ / g.

## Hydroxyde de calcium C (invention)

Conformément au procédé selon l'invention, on a éteint la chaux vive moulue en lit fluidisé (au moyen d'un gaz inerte) avec une quantité d'eau (saturée en chaux à 20°C) correspondant à un rapport en poids de 0,83 parts d'eau de chaux pour 1 part en poids de chaux vive, en présence de 0,002 part en poids de polydiméthylsiloxane comportant plusieurs groupes fonctionnels hydroxyles et de 0,0015 part en poids de diéthylène glycol. La température maximale du milieu réactionnel a été maintenue entre 85 et 95°C.
L'hydroxyde de calcium avait une teneur en humidité de 12%. Après séchage (au moyen d'un gaz inerte, par exemple azote), la teneur en humidité a été réduite à environ 1,5% et la surface spécifique était d'environ 41 $m^2$ / g.
L'examen des raies de diffraction RX selon la méthode des poudres de Debye-Sherrer a donné les résultats ci-après pour les différents hydroxydes de calcium préparés :

Tableau 1

| Hydroxyde de calcium | Intensité des raies (d = 0,49 nm) (unités arbitraires et relatives) | Réduction en % par rapport à l'intensité A |
|---|---|---|
| A (comparatif) | 60 | |
| B (comparatif) | 45 | 25 |
| C (invention) | 15 | 75 |

Il ressort de ce tableau que l'intensité de la raie de diffraction à d = 0,49 nm caractéristique de l'hydroxyde de calcium est considérablement plus faible pour la chaux C (invention) par rapport aux chaux A et B (comparatives).
Ces résultats montrent que le degré de cristallisation de l'hydroxyde de calcium C est beaucoup plus faible que les chaux A et B.
En raison des faibles valeurs de la masse volumique en vrac (M.V.V.) de l'hydroxyde de calcium soit sous forme de chaux hydratée sèche (M.V.V. < 500 kg / $m^3$), soit sous forme de lait de chaux à des concentrations en solide inférieures à 20% en poids ce qui correspond à des M.V.V. en solide < 200 kg / $m^3$, la chaux est généralement livrée sous forme de chaux vive pulvérulente.
Une hydratation in situ selon le procédé suivant l'invention permet de réduire les coûts de transport et d'obtenir un hydrate à très haute réactivité et une économie substantielle en réactif.
Les exemples d'utilisation ci-après mettent en exergue les avantages de l'utilisation de la chaux hydratée suivant l'invention dans des secteurs grands consommateurs de chaux hydratées.
Dans ces exemples d'utilisation, les trois hydroxydes de calcium (A,B et C) ont été utilisés à des concentrations égales et dans des conditions identiques, de manière à pouvoir comparer leurs efficacités.

## Exemple d'utilisation 1

Cet exemple concerne la fabrication de briques silico-calcaires. Quatre essais ont été réalisés, trois avec les hydroxydes de calcium (A,B et C) produits à partir d'une même chaux vive moulue. Un 4ème essai a été effectué à partir de cette chaux vive moulue qui constitue le test de référence et correspond à la technique traditionnelle d'utilisation de la chaux.
Ces 4 essais ont été réalisés en laboratoire à des concentrations en CaO disponible égales pour tous les essais soit à 7% en poids par rapport au sable humide et dans les conditions identiques décrites ci-après :

- Mélange dans un malaxeur planétaire d'un sable siliceux humide (8%) et de chaux durant 5 minutes.

- Mise au repos du mélange à 70°C durant 3 heures.

- Après réajustement de la teneur en eau du mélange à 6%, la mise en forme est réalisée par pressage dans un moule cylindrique de 50 mm de diamètre et de 50 mm de hauteur. La quantité de matière introduite dans le moule correspond à une densité de matière du prisme cylindrique de 1,8 gr / cm$^3$, soit pour un volume de 98,175 cm$^3$ de 176,715 gr d'un mélange humide de chaux hydratée et de sable.

- Le durcissement est obtenu par autoclavage à une pression de 10,5 bars pendant 6 heures.

- Les moules sont ensuite conservés à l'air ambiant du laboratoire pendant 7 jours avant de mesurer leur résistance à la compression.

- Les valeurs reprises dans le tableau 2 sont la moyenne de 3 mesures pour chaque essai.

Tableau 2

| | Résistance à la compression N/mm$^2$ | Résistance en valeurs Relatives |
|---|---|---|
| Chaux vive moulue | 19,3 | 76,6 |
| Hydroxyde de calcium A | 17,6 | 69,8 |
| Hydroxyde de calcium B | 21,8 | 86,5 |
| Hydroxyde de calcium C | 25,2 | 100,0 |

L'hydroxyde de calcium (C) selon l'invention donne une résistance en valeur relative de 100, pour 76,6 pour le procédé traditionnel d'incorporation de chaux vive dans le sable humide, de 69,8 pour l'hydroxyde de calcium (A) conventionnel, et de 86,5 pour l'hydroxyde de calcium (B) à grande surface spécifique. Tenant compte d'une proportionnalité linéaire entre la quantité de chaux et la résistance des matériaux silico-calcaires, ces performances très différentes offrent des perspectives intéressantes sur l'économie de chaux pour atteindre les résistances requises ou pour préparer des briques silico-calcaires avec une haute résistance à la compression.

Exemple d'utilisation 2

Cet exemple concerne le traitement de gaz acides au moyen d'hydroxyde de calcium et plus particulièrement la neutralisation de l'acide chlorhydrique contenu dans les gaz de fumées provenant de l'incinération d'ordures ménagères, par injection de chaux hydratée.

Un essai de laboratoire a été réalisé avec les hydroxydes de calcium A (comparatif), B (comparatif) et C (invention) dans des conditions identiques afin de comparer leur performance de neutralisation de l'acide chlorhydrique sous forme de gaz.

Les essais ont été réalisés en lit fixe. Les chaux ont été préalablement mises sous forme de granules d'un diamètre moyen de 3 mm afin de permettre le libre passage du gaz acide à travers le lit. La granulation a été faite au moyen d'un granulateur Eirich par mélange intensif à une humidité de 15%. Après traitement, les granules ont été séchés et tamisés entre 4 et 5 mm. La porosité intra et intergranulaire permet un contact intime du gaz (HCl) avec le solide (Ca(OH)$_2$).

La température du lit de granules a été maintenue à 160°C, température correspondant à la moyenne de température des gaz de fumées d'un incinérateur d'ordures ménagères.

On a fait passer un courant gazeux d'acide chlorhydrique présentant une concentration de 1800 mg HCl / m$^3$ ($[HCl]_0$) et une humidité de 12%, à travers le lit absorbant comprenant 9,42 g d'hydroxyde de calcium en grains.

Le temps de contact du gaz acide avec la chaux était d'environ 10 secondes, temps qui correspond aux conditions industrielles d'une injection sèche de poudre dans un incinérateur. La quantité totale d'acide chlorhydrique ajouté correspondait à 1 fois la stoechiométrie du Ca(OH)$_2$.

La quantité d'HCl non absorbée ($[HCl]_f$ étant la concentration en HCl des gaz après leur passage à travers le lit absorbant) a été collectée dans une solution titrée de soude caustique.

Les rendements de déchloration rassemblés dans le tableau 3, sont calculés comme suit :

$$R\ (\%) = \frac{[HCl]_0 - [HCl]_f}{[HCl]_0} \times 100$$

Tableau 3

| Hydroxyde de calcium | Rendement de déchloration R (%) |
|---|---|
| A (comparatif) | 29,8 |
| B (comparatif) | 40,5 |
| C (invention) | 64,6 |

Il ressort de ces résultats que l'hydroxyde de calcium C selon l'invention a une capacité d'absorption des gaz acides beaucoup plus élevée que l'hydrate conventionnel A et l'hydroxyde de calcium B.

Exemple d'utilisation 3

Dans le domaine de la stabilisation des sols argilo-limoneux, la notion de réactivité est sous-estimée. A l'instar de la fabrication des matériaux silico-calcaires, ces réactions solide / solide nécessitent une très grande réactivité de la chaux afin de limiter les pertes en réactif et d'obtenir de bons rendements. Traditionnellement une quantité de 2% de chaux vive pulvérulente est incorporée dans le sol à une température souvent inférieure à 20°C. Ainsi, l'hydratation de l'oxyde de calcium au contact de l'humidité du sol est réalisée dans des conditions très défavorables à l'obtention d'un hydroxyde de calcium réactif bien nécessaire aux réactions avec les minéraux argileux. Outre la très faible température de réaction, le ratio $H_2O$ /CaO, la présence d'acide humique et de sels minéraux contenus dans le sol auront une action très négative sur le processus d'hydratation. Pour ces raisons, seules les réactions à court terme càd endéans 2 heures sont prises en considération. Les effets bénéfiques à long terme résultant de la réaction pouzzolanique entre la chaux et les minéraux argileux ne sont pas pris en considération car les réactions sont très lentes et leurs effets ne se produisent qu'après la période de gel.

Les 3 hydroxydes de calcium (A, B et C) ainsi que la chaux vive moulue qui a servi à leur préparation ont été intimement mélangés à un sol argilo-limoneux dans un malaxeur planétaire de laboratoire.

Quatre dosages en chaux identiques ont été réalisés en tenant compte de leurs teneurs respectives en CaO disponible des chaux et correspondant à un dosage de 3% en $Ca(OH)_2$

Après une mise au repos des mélanges de 2 heures, la teneur en eau a été ajustée à 18,2% correspondant à la teneur en eau optimale de compactage. Les mélanges ont été ensuite introduits dans 5 éprouvettes cylindriques Proctor et compactés sur les deux faces à l'énergie du Proctor modifié. Les éprouvettes enveloppées d'un film de polyéthylène et d'un papier d'aluminium ont été conservées à 20°C.

Après 30, 60 et 120 jours, on a mesuré la résistance à la compression uniaxiale (Rc). Chaque résultat repris dans le tableau 4 est la moyenne de 5 mesures.

Tableau 4

| Type de chaux | Rc ($N / mm^2$) après | | |
|---|---|---|---|
| | 30 jours | 60 jours | 120 jours |
| Oxyde de calcium | 0,56 | 0,76 | 1,08 |
| Hydroxyde de calcium A | 0,72 | 1,04 | 1,56 |
| Hydroxyde de calcium B | 1,00 | 1,52 | 2,55 |
| Hydroxyde de calcium C | 1,56 | 2,24 | 3,60 |

Au vu des résultats, on constate qu'on obtient avec l'hydroxyde de calcium C selon l'invention des résistances à 120 jours 1,4 fois plus élevées que l'hydroxyde de calcium B à grande surface spécifique, 2,3 fois supérieures à l'hydroxyde de calcium A correspondant à un hydrate conventionnel et 3,3 fois supérieures au procédé habituel d'incorporation de la chaux vive dans le sol.

De la même façon, les effets à court terme que sont les modifications des limites d'Atterberg, et de la courbe de compactage Proctor ainsi que l'augmentation de l'indice CBR seront également améliorées.

Comme ces résultats sont proportionnels à la quantité de chaux incorporée au sol, il en résulte une très grande économie de chaux pour atteindre une performance requise par l'utilisation de la chaux à très haute réactivité selon le procédé suivant l'invention.

D'autres particules selon l'invention ont été préparées comme indiqué pour la préparation de l'hydroxyde de calcium C, si ce n'est qu'on a utilisé d'autres additifs et/ou d'autres quantités d'additifs.

| hydroxyde de calcium | additif(s) | part en poids additif pour 1 part en poids de CaO |
|---|---|---|
| C1 | poly dimethyl siloxane présentant une viscosité inférieure à 3cSt | 0,004 |
| C2 | poly dimethyl siloxane de viscosité comprise entre 100 et 1000cSt | 0,003 |
| | Diethylene glycol | 0,001 |
| C3 | silanol - polydimethylsiloxane de viscosité inférieure à 100 cSt | 0,004 |
| C4 | dimethylsiloxane - oxyde d'éthylène bloc copolymère de viscosité inférieure à 100cSt | 0,004 |
| C5 | dimethylsiloxane - oxyde de propylène bloc copolymère de viscosité comprise entre 1000 et 2000 cSt | |
| C6 | polydiméthylsiloxane (200cSt) | 0.003 |
| | triéthanolamine | 0.001 |
| C7 | nonoxynol-15 | 0,004 |
| C8 | octoxynol | 0,003 |
| | diethylèneglycol | 0,001 |
| C9 | Silwet(R) L77 | 0,003 |

D'autres additifs du type tensioactifs nonioniques qui peuvent être utilisés dans le procédé suivant l'invention sont décrits dans le document US 6,956,019.

**Revendications**

1. Particules d'hydroxyde de calcium et / ou de magnésium à très haute réactivité **caractérisées en ce qu'**elles présentent une raie de diffraction aux rayons X à d = 0,49nm selon la méthode des poudres de Debye-Sherrer d'intensité inférieure à 50% de l'intensité d'une chaux hydratée traditionnelle avec une teneur en humidité de 1,5% et une surface spécifique de 15,8m$^2$/g préparée par simple réaction d'une chaux vive moulue avec une quantité d'eau correspondant à un rapport en poids eau/chaux de 0,60/1.

2. Particules d'hydroxyde de calcium et / ou de magnésium à très haute réactivité selon la revendication 1, **caractérisées en ce qu'**elles présentent une raie de diffraction aux rayons X à d = 0,49nm selon la méthode des poudres de Debye-Sherrer d'intensité inférieure à 35% de l'intensité d'une chaux hydratée traditionnelle avec une teneur en humidité de 1,5% et une surface spécifique de 15,8m$^2$/g préparée par simple réaction d'une chaux vive moulue avec une quantité d'eau correspondant à un rapport en poids eau/chaux de 0,60/1.

3. Particules d'hydroxyde de calcium et / ou de magnésium à très haute réactivité selon la revendication 2, **caractérisées en ce qu'**elles présentent une raie de diffraction aux rayons X à d = 0,49nm selon la méthode des poudres de Debye-Sherrer d'intensité égale ou inférieure à environ 25% de l'intensité d'une chaux hydratée traditionnelle avec une teneur en humidité de 1,5% et une surface spécifique de 15,8m$^2$/g préparée par simple réaction d'une chaux vive moulue avec une quantité d'eau correspondant à un rapport en poids eau/chaux de 0,60/1.

**4.** Particules suivant l'une quelconque des revendications 1 à 3, **caractérisées en ce qu'**au moins 50% en poids, avantageusement au moins 75% en poids, de préférence au moins 85% en poids des particules se présente sous forme de micelles très faiblement cristallisés.

**5.** Particules d'hydroxyde de calcium et / ou de magnésium suivant l'une des revendications 1 à 4, **caractérisées en ce qu'**elles contiennent des additifs choisis parmi les organo poly siloxanes, les organo hydrosiloxanes ou hydropolysiloxanes, les méthylhydro-siloxanes ou -polysiloxanes, les polydiméthylsiloxanes, les polydiméthylsiloxanes comportant un ou plusieurs groupes silanols, les polymères organiques comportant un ou plusieurs groupes fonctionnels éther et alcool et leurs mélanges dans un rapport en poids additifs / CaO et / ou MgO supérieur à 0,0005 :1.

**6.** Particules d'hydroxyde de calcium et / ou de magnésium suivant l'une des revendications 1 à 5, **caractérisées en ce qu'**elles contiennent des additifs choisis parmi les organo poly siloxanes, les organo hydrosiloxanes ou hydropolysiloxanes, les méthylhydro-siloxanes ou -polysiloxanes, les polydiméthylsiloxanes, les polydiméthylsiloxanes comportant un ou plusieurs groupes silanols, les polymères organiques comportant un ou plusieurs groupes fonctionnels éther et alcool et leurs mélanges dans un rapport en poids additifs / CaO et / ou MgO inférieur à 0,01 :1.

**7.** Particules d'hydroxyde de calcium et / ou de magnésium suivant l'une des revendications 1 à 6, **caractérisées en ce qu'**elles contiennent des additifs choisis parmi les organo poly siloxanes, les organo hydrosiloxanes ou hydropolysiloxanes, les méthylhydro-siloxanes ou -polysiloxanes, les polydiméthylsiloxanes, les polydiméthylsiloxanes comportant un ou plusieurs groupes silanols, les polymères organiques comportant un ou plusieurs groupes fonctionnels éther et alcool et leurs mélanges dans un rapport en poids additifs / CaO et / ou MgO compris entre 0,002: 1 et 0,005:1.

**8.** Particules d'hydroxyde de calcium et/ou de magnésium suivant l'une quelconque des revendications précédentes, **caractérisées en ce qu'**au moins 50% en poids des particules est formée par des plaquettes présentant une épaisseur de moins de 150$\mu$m, avantageusement de moins de 100$\mu$m, en particulier de moins de 75$\mu$m.

**9.** Procédé de préparation d'un hydroxyde ce calcium et / ou de magnésium selon l'une quelconque des revendications précédentes, **caractérisé en ce qu'**on fait réagir à une température inférieure à 100°C du CaO et / ou MgO avec une eau saturée au moins à 25% en ions calcium et hydroxyles en présence d'un additif choisi parmi les organo poly siloxanes, les organo hydrosiloxanes ou hydropolysiloxanes, les méthylhydro-siloxanes ou -polysiloxanes, les polydiméthylsiloxanes, les polydiméthylsiloxanes comportant un ou plusieurs groupes silanols, les polymères organiques comportant un ou plusieurs groupes fonctionnels éther et alcool et leurs mélanges, le rapport en poids additif / CaO et / ou MgO étant supérieur à 0,0005 :1.

**10.** Procédé suivant la revendication 9, **caractérisé en ce qu'**on fait réagir à une température inférieure à 100°C du CaO et / ou MgO avec une eau saturée au moins à 50% en ions calcium et hydroxyles.

**11.** Procédé suivant la revendication 9, **caractérisé en ce qu'**on fait réagir à une température inférieure à 100°C du CaO et / ou MgO avec une eau saturée au moins à 75% en ions calcium et hydroxyles.

**12.** Procédé suivant la revendication 9, **caractérisé en ce qu'**on fait réagir à une température inférieure à 100°C du CaO et / ou MgO avec une eau saturée au moins proche de 95 à 100% en ions calcium et hydroxyles.

**13.** Procédé suivant la revendication 9, **caractérisé en ce qu'**on fait réagir à une température inférieure à 100°C du CaO et / ou MgO avec une eau au moins saturé à plus de 50% en ions calcium et hydroxyles, ladite eau étant en plus sursaturée en ions calcium et/ou en ions hydroxyles.

**14.** Procédé suivant l'une quelconque des revendications 9 à 13, **caractérisé en ce qu'**on utilise une eau présentant une saturation au moins partielle en ions calcium et en ions hydroxyles à une température d'environ 30°C.

**15.** Procédé suivant l'une quelconque des revendications 9 à 14, **caractérisé en ce qu'**on utilise une eau saturée en chaux à une température inférieure à 30°C.

**16.** Procédé suivant l'une quelconque des revendications 9 à 15, **caractérisé en ce que** le rapport en poids additif / CaO et / ou MgO est compris entre 0,001 :1 et 0,01 :1.

**17.** Procédé suivant la revendication 16, **caractérisé en ce que** le rapport en poids additif / CaO et / ou MgO est compris entre 0,002 :1 et 0,005 :1.

18. Procédé suivant l'une quelconque des revendications 9 à 17, **caractérisé en ce qu'**on maintient la température maximale de réaction entre 80° C et 95°C.

19. Procédé suivant la revendication 18, **caractérisé en ce qu'**on maintient la température de réaction d'au moins 50% en poids du CaO et/ou MgO avec une eau présentant une saturation à une température comprise entre 80°C et 95°C.

20. Procédé suivant l'une quelconque des revendications 9 à 19, **caractérisé en ce que** le ou les additifs sont intimement mélangés au CaO et / ou MgO durant une opération de broyage et/ou de mouture, et/ou incorporés dans l'eau d'hydratation.

21. Utilisation de particules d'hydroxyde de calcium et / ou de magnésium suivant l'une quelconque des revendications 1 à 8, dans une application choisie parmi le groupe constitué du traitement des gaz, la stabilisation des sols, le traitement des eaux et des gaz, la production de matériaux silico-calcaires, le traitement des sols, le traitement de liquides, en particulier le traitement d'eaux, les peintures minérales, les enduits de plafonnage, et les mortiers de maçonnerie.

22. Briques silico-calcaires préparées par mélange d'un sable siliceux humide et particules d'hydroxyde de calcium et / ou de magnésium suivant l'une quelconque des revendications 1 à 8, mise en forme et autoclavage, lesdites briques présentant après 7 jours à la température ambiante (20°C) une résistance à la compression d'au moins 25N/mm$^2$.

**Claims**

1. Particles of calcium and/or magnesium hydroxide with very high reactivity **characterized in that** they have an X-ray diffraction line at d = 0.49 nm according to the Debye-Sherrer powder method with an intensity of less than 50% of the intensity of a traditional hydrated lime with a moisture content of 1.5% and a specific surface area of 15.8 m$^2$/g prepared by simple reaction of a quicklime ground with a quantity of water corresponding to a water/lime ratio by weight of 0.60/1.

2. Particles of calcium and/or magnesium hydroxide with very high reactivity according to claim 1, **characterized in that** they have an X-ray diffraction line at d = 0.49 nm according to the Debye-Sherrer powder method with an intensity of less than 35% of the intensity of a traditional hydrated lime with a moisture content of 1.5% and a specific surface area of 15.8 m$^2$/g prepared by simple reaction of a quicklime ground with a quantity of water corresponding to a water/lime ratio by weight of 0.60/1.

3. Particles of calcium and/or magnesium hydroxide with very high reactivity according to claim 2, **characterized in that** they have an X-ray diffraction line at d = 0.49 nm according to the Debye-Sherrer powder method with an intensity equal to or less than approximately 25% of the intensity of a traditional hydrated lime with a moisture content of 1.5% and a specific surface area of 15.8 m$^2$/g prepared by simple reaction of a quicklime ground with a quantity of water corresponding to a water/lime ratio by weight of 0.60/1.

4. Particles according to any one of claims 1 to 3, **characterized in that** at least 50% by weight, advantageously at least 75% by weight, preferably at least 85% by weight of the particles is in the form of very weakly crystallized micelles.

5. Particles of calcium and/or magnesium hydroxide according to one of claims 1 to 4, **characterized in that** they contain additives chosen from the organopolysiloxanes, the organo-hydrosiloxanes or hydropolysiloxanes, the methylhydro-siloxanes or -polysiloxanes, the polydimethylsiloxanes, the polydimethylsiloxanes comprising one or more silanol groups, the organic polymers comprising one or more ether and alcohol functional groups and their mixtures in a ratio by weight of additives/CaO and/or MgO greater than 0.0005:1.

6. Particles of calcium and/or magnesium hydroxide according to one of claims 1 to 5, **characterized in that** they contain additives chosen from the organopolysiloxanes, the organo-hydrosiloxanes or hydropolysiloxanes, the methylhydro-siloxanes or -polysiloxanes, the polydimethylsiloxanes, the polydimethylsiloxanes comprising one or more silanol groups, the organic polymers comprising one or more ether and alcohol functional groups and their mixtures in a ratio by weight of additives/CaO and/or MgO less than 0.01:1.

7. Particles of calcium and/or magnesium hydroxide according to one of claims 1 to 6, **characterized in that** they contain additives chosen from the organopolysiloxanes, the organo-hydrosiloxanes or hydropolysiloxanes, the methylhydro-siloxanes or -polysiloxanes, the polydimethylsiloxanes, the polydimethylsiloxanes comprising one or more silanol groups, the organic polymers comprising one or more ether and alcohol functional groups and their mixtures in a ratio by weight of additives/CaO and/or MgO comprised between 0.002:1 and 0.005:1.

8. Particles of calcium and/or magnesium hydroxide according to any one of the previous claims, **characterized in that** at least 50% by weight of the particles is formed by platelets having a thickness of less than 150 $\mu$m, advantageously less than 100 $\mu$m, in particular less than 75 $\mu$m.

9. Process for the preparation of calcium and/or magnesium hydroxide according to any one of the previous claims, **characterized in that** CaO and/or MgO is reacted at a temperature of less than 100°C with water saturated at least to 25% with calcium and hydroxyl ions in the presence of an additive chosen from the organopolysiloxanes, the organo-hydrosiloxanes or hydropolysiloxanes, the methylhydro-siloxanes or - polysiloxanes, the polydimethylsiloxanes, the polydimethylsiloxanes comprising one or more silanol groups, the organic polymers comprising one or more ether and alcohol functional groups and their mixtures, the ratio by weight of additive/CaO and/or MgO being greater than 0.0005:1.

10. Process according to claim 9, **characterized in that** CaO and/or MgO is reacted at a temperature of less than 100°C with water saturated at least to 50% with calcium and hydroxyl ions.

11. Process according to claim 9, **characterized in that** CaO and/or MgO is reacted at a temperature of less than 100°C with water saturated at least to 75% with calcium and hydroxyl ions.

12. Process according to claim 9, **characterized in that** CaO and/or MgO is reacted at a temperature of less than 100°C with water saturated at least close to 95 to 100% with calcium and hydroxyl ions.

13. Process according to claim 9, **characterized in that** CaO and/or MgO is reacted at a temperature of less than 100°C with water at least saturated to more than 50% with calcium and hydroxyl ions, said water being moreover supersaturated with calcium ions and/or with hydroxyl ions.

14. Process according to any one of claims 9 to 13, **characterized in that** water is used having an at least partial saturation with calcium ions and with hydroxyl ions at a temperature of approximately 30°C.

15. Process according to any one of claims 9 to 14, **characterized in that** water saturated in lime is used at a temperature of less than 30°C.

16. Process according to any one of claims 9 to 15, **characterized in that** the ratio by weight of additive/CaO and/or MgO is comprised between 0.001:1 1 and 0.01:1.

17. Process according to claim 16, **characterized in that** the ratio by weight of additive/CaO and/or MgO is comprised between 0.002:1 and 0.005:1.

18. Process according to any one of claims 9 to 17, **characterized in that** the maximum temperature of the reaction is maintained between 80°C and 95°C.

19. Process according to claim 18, **characterized in that** one maintains the temperature of the reaction of at least 50% by weight of CaO and/or MgO with water having a saturation at a temperature comprised between 80°C and 95°C.

20. Process according to any one of claims 9 to 19, **characterized in that** the additive or additives are intimately mixed with CaO and/or MgO during a grinding and/or milling operation, and/or incorporated in the water of hydration.

21. Use of particles of calcium and/or magnesium hydroxide according to any one of claims 1 to 8, in an application chosen from the group constituted by gas treatment, soil stabilization, water and gas treatment, the production of sand-lime materials, soil treatment, the treatment of liquids, in particular the treatment of water, mineral paints, coatings for ceiling boarding, and masonry mortars.

22. Sand-lime bricks prepared by mixing a moist siliceous sand and particles of calcium and/or magnesium hydroxide according to any one of claims 1 to 8, shaping and autoclaving, said bricks having a compression strength after 7 days at ambient temperature (20°C) of at least 25 N/mm$^2$.

**Patentansprüche**

1. Calcium- und/oder Magnesiumhydroxidpartikel mit sehr hoher Reaktivität, **dadurch gekennzeichnet, dass** sie gemäß der Pudermethode nach Debye-Sherrer eine Beugungslinie für Röntgenstrahlen von d = 0,49nm mit einer Intensität von unter 50% der Intensität eines üblichen hydrierten Kalks mit einem Feuchtigkeitsgehalt von 1,5% und einer spezifischen Oberfläche von 15,8m$^2$/g aufweisen, der durch eine einfache Reaktion eines gemahlenen, ungelöschten Kalks mit einer Wassermenge in einem Gewichtsverhältnis Wasser/Kalk von 0,60/1 zubereitet ist.

2. Calcium- und/oder Magnesiumhydroxidpartikel mit sehr hoher Reaktivität nach Anspruch 1. **dadurch gekennzeichnet, dass** sie gemäß der Pudermethode nach Debye-Sherrer eine Beugungslinie für Röntgenstrahlen von d = 0,49nm mit einer Intensität von unter 35% der Intensität eines üblichen hydrierten Kalks mit einem Feuchtigkeitsgehalt von 1,5% und einer spezifischen Oberfläche von 15,8m$^2$/g aufweisen, der durch eine einfache Reaktion eines gemahlenen, ungelöschten Kalks mit einer Wassermenge in einem Gewichtsverhältnis Wasser/Kalk von 0,60/1 zubereitet ist.

3. Calcium- und/oder Magnesiumhydroxidpartikel mit sehr hoher Reaktivität nach Anspruch 2, **dadurch gekennzeichnet, dass** sie gemäß der Pudermethode nach Debye-Sherrer eine Beugungslinie für Röntgenstrahlen von d = 0,49nm mit einer Intensität von unter 25% der Intensität eines üblichen hydrierten Kalks mit einem Feuchtigkeitsgehalt von 1,5% und einer spezifischen Oberfläche von 15,8m$^2$/g aufweisen, der durch eine einfache Reaktion eines gemahlenen, ungelöschten Kalks mit einer Wassermenge in einem Gewichtsverhältnis Wasser/Kalk von 0,60/1 zubereitet ist.

4. Partikel nach einem der Ansprüche 1 bis 3, **dadurch gekennzeichnet, dass** mindestens 50 Gewichtsprozent, vorteilhafterweise mindestens 75 Gewichtsprozent, vorzugsweise mindestens 85 Gewichtsprozent der Partikel in der Form von sehr schwach kristallisierten Mizellen vorliegen.

5. Calcium- und/oder Magnesiumhydroxidpartikel nach einem der Ansprüche 1 bis 4, **dadurch gekennzeichnet, dass** sie Zusatzstoffe in einem Gewichtsverhältnis Zusatzstoff / CaO und/oder MgO von über 0.0005:1 enthalten, welche aus den Organopolysiloxanen, den Organohydrosiloxanen oder Hydropolysiloxanen, den Methylhydrosiloxanen oder Methylhydropolysiloxanen, den Polydimethylsiloxanen, den Polydimethylsiloxanen mit einer oder mehreren Silanolgruppen, den organischen Polymeren mit einer oder mehreren funktionalen Äther- und Alkoholgruppen und deren Mischungen gewählt sind.

6. Calcium- und/oder Magnesiumhydroxidpartikel nach einem der Ansprüche 1 bis 5, **dadurch gekennzeichnet, dass** sie Zusatzstoffe in einem Gewichtsverhältnis Zusatzstoff / CaO und/oder MgO von unter 0,01:1 enthalten, welche aus den Organopolysiloxanen, den Organohydrosiloxanen oder Hydropolysiloxanen, den Methylhydrosiloxanen oder Methylhydropolysiloxanen, den Polydimethylsiloxanen, den Polydimethylsiloxanen mit einer oder mehreren Silanolgruppen, den organischen Polymeren mit einer oder mehreren funktionalen Äther- und Alkoholgruppen und deren Mischungen gewählt sind.

7. Calcium- und/oder Magnesiumhydroxidpartikel nach einem der Ansprüche 1 bis 6, **dadurch gekennzeichnet, dass** sie Zusatzstoffe in einem Gewichtsverhältnis Zusatzstoff / CaO und/oder MgO von zwischen 0,002:1 und 0,005:1 enthalten, welche aus den Organopolysiloxanen, den Organohydrosiloxanen oder Hydropolysiloxanen, den Methylhydrosiloxanen oder Methylhydropolysiloxanen, den Polydimethylsiloxanen, den Polydimethylsiloxanen mit einer oder mehreren Silanolgruppen, den organischen Polymeren mit einer oder mehreren funktionalen Äther- und Alkoholgruppen und deren Mischungen gewählt sind.

8. Calcium- und/oder Magnesiumhydroxidpartikel nach einem der vorstehenden Ansprüche, **dadurch gekennzeichnet, dass** mindestens 50 Gewichtsprozent der Partikel durch Plättchen mit einer Dicke von weniger als 150$\mu$m, vorteilhafterweise von weniger als 100$\mu$m, insbesondere von weniger als 75$\mu$m gebildet sind.

9. Verfahren zur Herstellung von Calcium- und/oder Magnesiumhydroxid nach einem der vorstehenden Ansprüche, **dadurch gekennzeichnet, dass** CaO und/oder MgO bei einer Temperatur von unter 100°C mit mindestens zu 25% mit Calcium- und Hydroxylionen gesättigtem Wasser unter Anwesenheit eines Zusatzstoffes in einem Gewichtsverhältnis Zusatzstoff / CaO und/oder MgO von über 0,0005:1 zur Reaktion gebracht wird, wobei der Zusatzstoff aus den Organopolysiloxanen, den Organohydrosiloxanen oder Hydropolysiloxanen, den Methylhydrosiloxanen oder Methylhydropolysiloxanen, den Polydimethylsiloxanen, den Polydimethylsiloxanen mit einer oder mehreren Silanolgruppen, den organischen Polymeren mit einer oder mehreren funktionalen Äther- und Alkoholgruppen und deren Mischungen gewählt sind.

10. Verfahren nach Anspruch 9, **dadurch gekennzeichnet, dass** CaO und/oder MgO bei einer Temperatur von unter 100°C mit mindestens zu 50% mit Calcium- und Hydroxylionen gesättigtem Wasser zur Reaktion gebracht wird.

11. Verfahren nach Anspruch 9, **dadurch gekennzeichnet, dass** CaO und/oder MgO bei einer Temperatur von unter 100°C mit mindestens zu 75% mit Calcium- und Hydroxylionen gesättigtem Wasser zur Reaktion gebracht wird.

12. Verfahren nach Anspruch 9, **dadurch gekennzeichnet, dass** CaO und/oder MgO bei einer Temperatur von unter 100°C mit mindestens annähernd zu 95% bis 100% mit Calcium- und Hydroxylionen gesättigtem Wasser zur Reaktion gebracht wird.

13. Verfahren nach Anspruch 9, **dadurch gekennzeichnet, dass** CaO und/oder MgO bei einer Temperatur von unter 100°C mit mindestens mehr als zu 50% mit Calcium- und Hydroxylionen gesättigtem Wasser zur Reaktion gebracht wird, wobei das Wasser zusätzlich mit Calciumionen und/oder Hydroxylionen übersättigt ist.

14. Verfahren nach einem der Ansprüche 9 bis 13, **dadurch gekennzeichnet, dass** Wasser verwendet wird, das eine zumindest teilweise Sättigung mit Calciumionen und Hydroxylionen bei einer Temperatur von etwa 30°C aufweist.

15. Verfahren nach einem der Ansprüche 9 bis 14, **dadurch gekennzeichnet, dass** mit Kalk bei einer Temperatur von unter 30°C gesättigtes Wasser verwendet wird.

16. Verfahren nach einem der Ansprüche 9 bis 15, **dadurch gekennzeichnet, dass** das Gewichtsverhältnis Zusatzstoff / CaO und/oder MgO zwischen 0,001:1 und 0,01:1 liegt.

17. Verfahren nach Anspruch 16, **dadurch gekennzeichnet, dass** das Gewichtsverhältnis Zusatzstoff / CaO und/oder MgO zwischen 0.002:1 und 0,005:1 liegt.

18. Verfahren nach einem der Ansprüche 9 bis 17, **dadurch gekennzeichnet, dass** die maximale Reaktionstemperatur zwischen 80°C und 95°C gehalten wird.

19. Verfahren nach Anspruch 16, **dadurch gekennzeichnet, dass** die Reaktionstemperatur von mindestens 50 Gewichtsprozent des CaO und/oder MgO mit eine Sättigung aufweisendem Wasser bei einer Temperatur zwischen 80°C und 95°C gehalten wird.

20. Verfahren nach einem der Ansprüche 9 bis 19, **dadurch gekennzeichnet, dass** der oder die Zusatzstoffe in einem Zerkleinerungs- oder Mahlvorgang mit dem CaO und/oder MgO innig durchmischt werden oder in dem Hydratationswasser enthalten sind.

21. Verwendung von Calcium- und/oder Magnesiumhydroxidpartikeln nach einem der Ansprüche 1 bis 8 in einer Anwendung, die aus einer Gruppe bestehend aus Gasverarbeitung, Bodenstabilisierung, Wasser- und Gasverarbeitung, Herstellung von Kalksandsteinprodukten, Bodenverarbeitung und Flüssigkeitsverarbeitung, insbesondere der Verarbeitung von Wasser, Mineralfarben, Deckenverputzmaterialien und Maurermörteln, gewählt ist.

22. Durch Mischung von einem siliziumhaltigen, feuchten Sand mit Calcium- und/oder Magnesiumhydroxidpartikeln nach einem der Ansprüche 1 bis 8 gebildete Kalksandsteine, die nach Formgebung und Autoklavenbehandlung und 7 Tagen in Umgebungstemperatur (20°C) eine Druckfestigkeit von mindestens 25N/mm$^2$ aufweisen.

## RÉFÉRENCES CITÉES DANS LA DESCRIPTION

**Documents brevets cités dans la description**

- US 2309168 A
- US 2365736 A
- US 2409546 A
- US 3106453 A
- US 3250520 A
- US 2453637 A
- US 2956867 A
- US 3120444 A
- US 4636379 A
- DE 3620024 A1
- EP 0558522 B1
- US 5492685 A
- EP 0861209 B1
- EP O558522 B1
- US 6956019 B

**Littérature non-brevet citée dans la description**

- **W. Jozewicz ; B.K.Gullet.** *Zement-Kalk-Gips,* Janvier 1994